# EUROPÄISCHE PATENTSCHRIFT

(11) **EP 3 224 074 B1**
(45) Veröffentlichungstag und Bekanntmachung des Hinweises auf die Patenterteilung: **25.07.2018**
(21) Anmeldenummer: 15797258.9
(22) Anmeldetag: 19.11.2015
(51) Int. Cl.: B60J 7/16, B60J 7/14, B60J 7/20

(54) **KRAFTFAHRZEUG**
MOTOR VEHICLE
VÉHICULE AUTOMOBILE

(30) Priorität: 27.11.2014 DE 102014017518
(43) Veröffentlichungstag der Anmeldung: 04.10.2017
(73) Patentinhaber: Audi AG, 85045 Ingolstadt (DE)
(72) Erfinder: ROSSETTI, Mario, 74861 Neudenau (DE)
(86) Internationale Anmeldenummer: PCT/EP2015/002324
(87) Internationale Veröffentlichungsnummer: WO 2016/082923

(56) Entgegenhaltungen:
- FR-A1- 2 601 906
- GB-A- 2 420 530
- US-A1- 2006 131 922

## Beschreibung

Die Erfindung betrifft ein Kraftfahrzeug mit einer Karosserie mit einem zwischen einer geschlossenen Position und einer geöffneten Position verstellbaren Dach, nach der im Oberbegriff von Anspruch 1 näher definierten Art.

Aus der DE 10 2005 002 935 A1 ist ein gattungsgemäßes Kraftfahrzeug bekannt. Da die Seitensäulen, dort als C-Säulen bezeichnet, nicht abgesenkt werden können, kann sich bei diesem Fahrzeug kein echtes Cabriolet-Gefühl einstellen. Aus FR 2601906 A1 ist ebenfalls ein gattungsgemäßes Kraftfahrzeug bekannt.

Aus dem allgemeinen Stand der Technik sind außerdem die unterschiedlichsten Cabriolet-Fahrzeuge bekannt, die jedoch zumeist eine sehr eingeschränkte Transportkapazität aufweisen.

Es ist daher Aufgabe der vorliegenden Erfindung, ein Kraftfahrzeug mit einem zwischen einer geschlossenen Position und einer geöffneten Position verstellbaren Dach zu schaffen, das einerseits in der geschlossenen Position des Dachs ein großes Transportvermögen aufweist und andererseits in der geöffneten Position des Dachs ein echtes Cabriolet-Gefühl vermittelt.

Erfindungsgemäß wird diese Aufgabe durch die in Anspruch 1 genannten Merkmale gelöst.

Dadurch, dass das vordere Dachteil mit den beiden Seitensäulen und das hintere Dachteil mit den beiden Hecksäulen drehbar miteinander verbunden ist, können beide Dachteile bei einer entsprechenden Bewegung der beweglich mit der Karosserie verbundenen Seiten- und Hecksäulen wie die jeweiligen Säulen selbst ebenfalls in die Karosserie eingeschwenkt werden. Dadurch ist es möglich, das Dach des erfindungsgemäßen Kraftfahrzeugs in seiner geöffneten Position in eine solche Stellung zu bringen, dass ein mit "üblichen" Cabriolets vergleichbares Gefühl entsteht. Dennoch ergibt sich durch das Vorhandensein der Seitensäulen und der Hecksäulen im geschlossenen Zustand des Dachs ein derartiges Kraftfahrzeug, das eine weitaus größere Transportkapazität besitzt als bekannte Cabriolet-Fahrzeuge.

Eine Einsparung von Bauteilen, verbunden mit einer Gewichtsersparnis und einer Vereinfachung der Betätigung des Dachs des erfindungsgemäßen Kraftfahrzeugs ergibt sich dadurch, dass das hintere Dachteil einen Verdeckkastendeckel bildet, der zur Herstellung eines tadellosen äußeren Erscheinungsbilds des Kraftfahrzeugs das vordere Dachteil, die beiden Seitensäulen und die beiden Hecksäulen abdeckt.

Um eine einfach und zuverlässig zu steuernde Beweglichkeit der Seitensäulen zu erreichen, kann in einer sehr vorteilhaften Weiterbildung der Erfindung vorgesehen sein, dass die beiden Seitensäulen an jeweiligen Drehpunkten drehbar an der Karosserie angebracht sind.

Des Weiteren kann vorgesehen sein, dass die beiden Hecksäulen gegenüber der Karosserie drehbar gelagert und in jeweiligen Führungen gegenüber der Karosserie verschieblich sind. Durch diese Kombination einer drehbaren Lagerung und einer Verschieblichkeit der beiden Hecksäulen lassen sich dieselben trotz ihrer annähernd vertikalen Stellung in der geschlossenen Position des Dachs problemlos in die Karosserie einfahren, um schließlich von dem hinteren Dachteil als Verdeckkastendeckel abgedeckt zu werden.

Um die Steifigkeit des erfindungsgemäßen Dachs sowohl in seiner geschlossenen als auch in seiner geöffneten Position zu erhöhen, kann des Weiteren vorgesehen sein, dass die beiden Seitensäulen in Querrichtung der Karosserie miteinander verbunden sind.

Ein einfacher Schutz der Passagiere des erfindungsgemäßen Kraftfahrzeugs ergibt sich, wenn ein mit jeweiligen A-Säulen verbundener Windschutzscheibenrahmen in einer derartigen Position angeordnet ist, dass er zusammen mit dem Verdeckkastendeckel in der geöffneten Position des Dachs einen Überrollschutz für sich in dem Kraftfahrzeug befindenden Personen bildet.

Wenn außerdem vorgesehen ist, dass das hintere Dachteil in der geschlossenen Position des Dachs auf den beiden Seitensäulen aufliegt, so wird eine besonders hohe Steifigkeit des Dachs und somit der Karosserie in der geschlossenen Position erreicht.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: ein erfindungsgemäßes Kraftfahrzeug mit einem Dach in seiner geschlossenen Position;
- Fig. 2: das Kraftfahrzeug aus Fig. 1 mit dem Dach in einer ersten Zwischenposition;
- Fig. 3: das Kraftfahrzeug aus Fig. 1 mit dem Dach in einer zweiten Zwischenposition;
- Fig. 4: das Kraftfahrzeug aus Fig. 1 mit dem Dach in einer dritten Zwischenposition;
- Fig. 5: das Kraftfahrzeug aus Fig. 1 mit dem Dach in einer vierten Zwischenposition;
- Fig. 6: das Kraftfahrzeug aus Fig. 1 mit dem Dach in einer fünften Zwischenposition;
- Fig. 7: das Kraftfahrzeug aus Fig. 1 mit dem Dach in einer sechsten Zwischenposition;
- Fig. 8: das Kraftfahrzeug aus Fig. 1 mit dem Dach in seiner geöffneten Position; und
- Fig. 9: das Kraftfahrzeug aus Fig. 1 mit einer geöffneten Heckklappe.

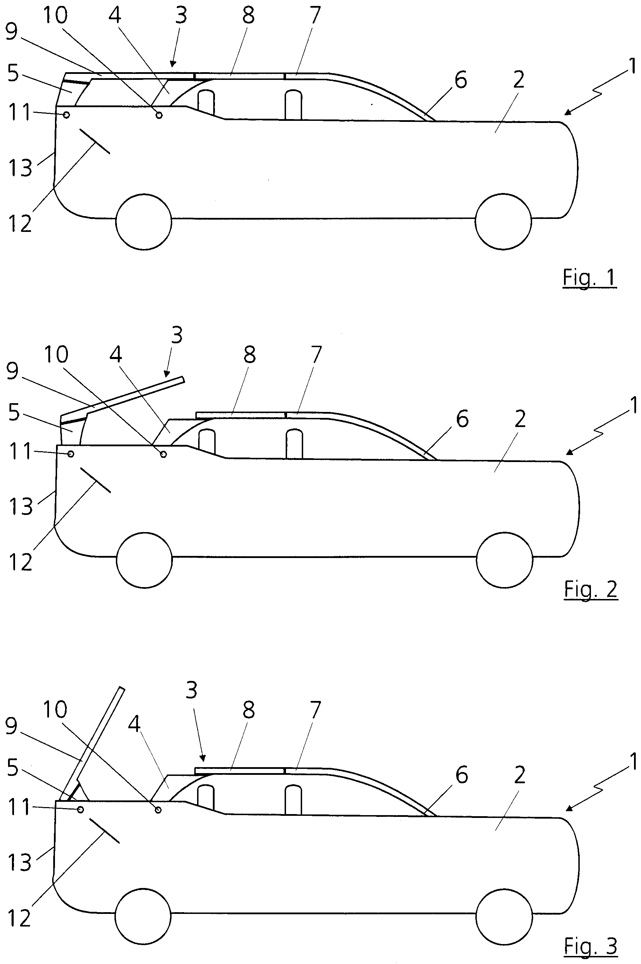

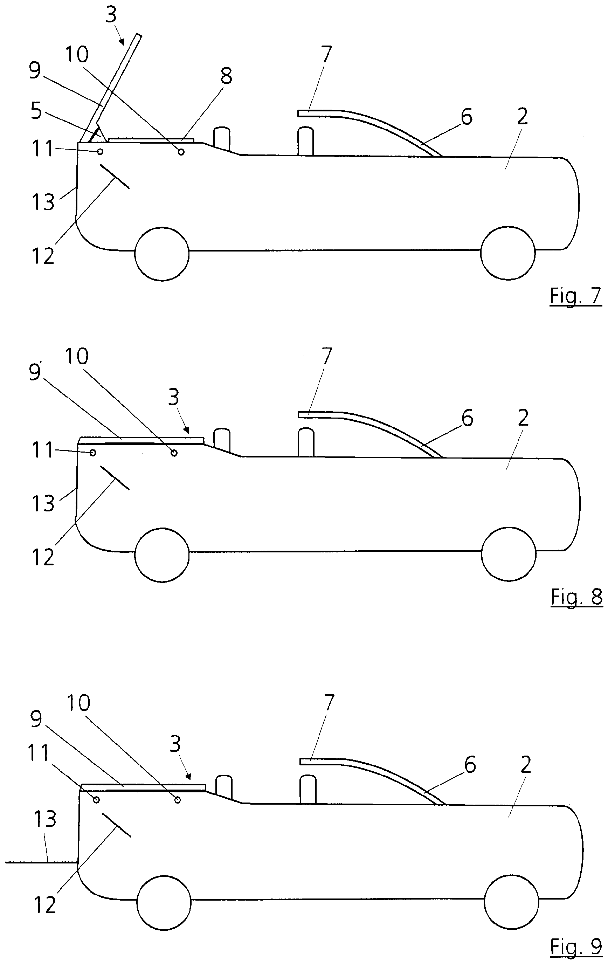

Fig. 1 zeigt eine Seitenansicht eines Kraftfahrzeugs 1, das in an sich bekannter Weise eine Karosserie 2 aufweist. Die Karosserie 2 weist ein Dach 3 auf, das, wie nachfolgend ausführlich beschrieben, zwischen einer in Fig. 1 dargestellten geschlossenen Position und einer in Fig. 8 dargestellten geöffneten Position verstellbar ist. Des Weiteren weist die Karosserie 2 zwei gegenüberliegende, d.h. sich auf beiden Seiten der Karosserie 2 befindende Seitensäulen 4 und zwei gegenüberliegende, d.h. sich auf beiden Seiten der Karosserie 2 befindende Hecksäulen 5 auf, von denen in den Seitenansichten jeweils nur eine zu erkennen ist. Die Seitensäulen 4 und die Hecksäulen 5 bilden im geschlossenen Zustand des Dachs 3 einen Teil der Karosserie 2. Im vorderen Bereich weist die Karosserie 2 jeweilige A-Säulen 6 auf, die in ihrem hinteren, dem Dach 3 zugewandten Bereich in einem Windschutzscheibenrahmen 7 enden. Ähnlich wie die A-Säulen 6 wäre es auch möglich, die Seitensäulen 4 und die Hecksäulen 5 mit Buchstaben zu bezeichnen, beispielsweise als B-, C- oder D-Säulen. Um Verwechslungen mit bestehenden Fahrzeugen zu vermeiden und aufgrund der Tatsache, dass das Kraftfahrzeug 1 im dargestellten Ausführungsbeispiel keine B-Säulen im eigentlichen Sinne aufweist, wird hierauf jedoch verzichtet. Durch dieses Weglassen der B-Säule wird das Cabriolet-Gefühl des Kraftfahrzeugs 1 weiter verbessert.

Das Dach 3 weist im vorliegenden Fall ein vorderes Dachteil 8 und ein hinteres Dachteil 9 auf. Grundsätzlich könnte sich vor dem vorderen Dachteil 8 noch ein weiteres Dachteil befinden bzw. das vordere Dachteil 8 könnte grundsätzlich zweiteilig ausgeführt sein. Aus Gründen der Optik und zur Vereinfachung der Funktion des Dachs 3 weist das zwischen der geschlossenen Position gemäß Fig. 1 und der geöffneten Position gemäß Fig. 8 verstellbare Dach 3 jedoch nur das eine vordere Dachteil 8 auf. Das vordere Dachteil 8 ist drehbar mit den beiden Seitensäulen 4 verbunden, wohingegen das hintere Dachteil 9 drehbar mit den beiden Hecksäulen 5 verbunden ist. Des Weiteren sind die beiden Seitensäulen 4 und die beiden Hecksäulen 5 beweglich mit der Karosserie 2 verbunden. Im vorliegenden Fall sind die beiden Seitensäulen 4 an jeweiligen Drehpunkten 10 drehbar an der Karosserie 2 angebracht. In ähnlicher Weise sind die beiden Hecksäulen 5 an jeweiligen Drehpunkten 11 drehbar gegenüber der Karosserie 2 gelagert. Durch die jeweiligen Drehpunkte 10 und 11 ergeben sich jeweilige Drehachsen für die Seitensäulen 4 bzw. die Hecksäulen 5. Zusätzlich sind die beiden Hecksäulen 5 in jeweiligen, ebenso wie die Drehpunkte 10 und 11 nur schematisch angedeuteten Führungen 12 gegenüber der Karosserie 2 verschieblich. Die Seitensäulen 4 können demnach eine Drehbewegung, die Hecksäulen 5 eine kombinierte Dreh- und Verschiebebewegung gegenüber der Karosserie 2 ausführen.

In den Figuren 2 bis 7 sind auf sehr schematische und nicht maßstäbliche Weise verschiedene Zwischenpositionen des Dachs 3 bei seiner Bewegung zwischen der geschlossenen Position gemäß Fig. 1 und der geöffneten Position gemäß Fig. 8 dargestellt. In der Position gemäß Fig. 2 wurden die beiden Hecksäulen 5 um den Drehpunkt 11 gedreht, wodurch das hintere Dachteil 9 von den Seitensäulen 4 abgehoben wurde. Zusätzlich zu der Drehung um den Drehpunkt 11 kann hierbei gegebenenfalls auch eine gewisse Verschiebebewegung entlang der Führungen 12 stattfinden. Die Führungen 12 können beispielsweise in Form von Schienen ausgebildet sein, es ist jedoch auch der Einsatz von Schraubenspindeln, wie beispielsweise Kugelumlaufspindeln und dergleichen, denkbar.

In der Stellung von Fig. 3 haben die Hecksäulen 5 zusammen mit dem hinteren Dachteil 9 ihre am weitesten nach hinten geschwenkte Position erreicht, wozu sowohl eine Drehung um den Drehpunkt 11 als auch eine Bewegung entlang der Führung 12 vorgenommen wurde.

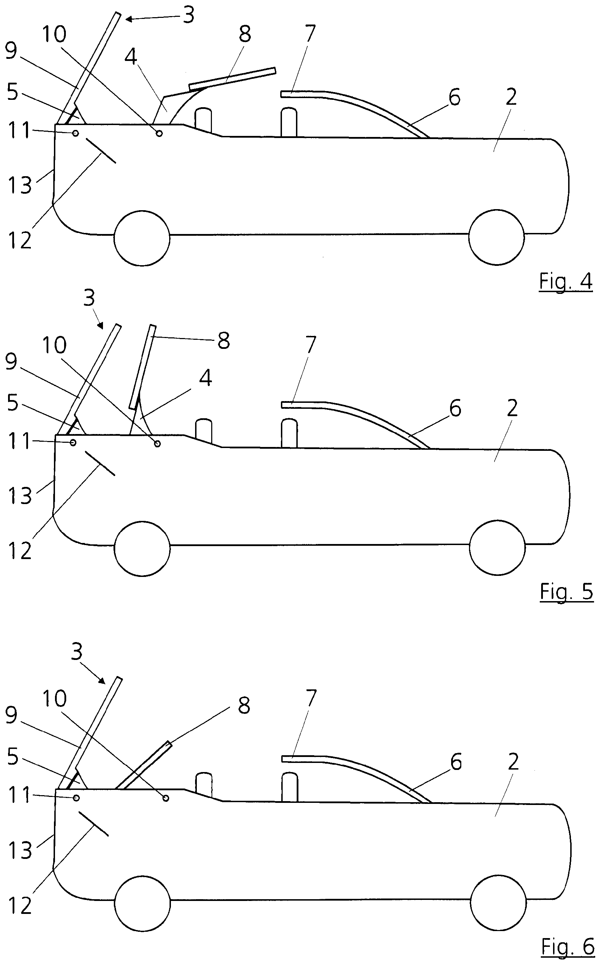

In der Zwischenposition von Fig. 4 wurden auch die Seitensäulen 4 um ihren Drehpunkt 10 gedreht, wodurch das vordere Dachteil 8 von dem Windschutzscheibenrahmen 7 gelöst und ebenfalls angehoben wurde. Die Hecksäulen 5 und das hintere Dachteil 9 befinden sich in derselben Position wie gemäß Fig. 3.

In der in Fig. 5 dargestellten Position haben die Seitensäulen 4 und das daran angebrachte vordere Dachteil 8 ihre oberste Position erreicht, indem die beiden Seitensäulen 4 weiter um den Drehpunkt 10 verdreht wurden. Gegebenenfalls kann für die Seitensäulen 4 auch eine lineare Führung analog zu der Führung 12 für die Hecksäulen 5 vorgesehen sein.

Fig. 6 zeigt das vordere Dachteil 8 nach einer Bewegung nach unten in die Karosserie 2 des Kraftfahrzeugs 1 hinein. Hierbei können zum Beispiel zunächst die Seitensäulen 4 verdreht werden, um anschließend starr zu bleiben, wenn das vordere Dachteil 8 gegenüber den Seitensäulen 4 verschwenkt wird. Selbstverständlich ist auch eine gleichzeitige Bewegung der Seitensäulen 4 gegenüber der Karosserie 2 und des vorderen Dachteils 8 gegenüber den Seitensäulen 4 möglich. Die Seitensäulen 4 können in diesem Zustand bereits in ihrer untersten, abgelegten Position in der Karosserie 2 angekommen sein

Fig. 7 zeigt die geschlossene Position des vorderen Dachteils 8, das dabei seine unterste Position in der Karosserie 2 eingenommen hat, indem es weitere gegenüber den Seitensäulen 4 verdreht wurde. Selbstverständlich kann das vordere Dachteil 8 in dieser Position auch so weit nach unten abgelegt sein, dass es sich vollständig innerhalb der Karosserie 2 befindet.

In Fig. 8 ist die vollständig geöffnete Position des Dachs 3 dargestellt, bei welcher das hintere Dachteil 9 in ähnlicher Weise wie das vordere Dachteil 8 gegenüber den Hecksäulen 5 geklappt bzw. gedreht und damit in die horizontale Stellung gebracht wurde. In dieser geöffneten Position des Dachs 3 bildet das hintere Dachteil 9 einen Verdeckkastendeckel, unter dem das vordere Dachteil 8, die beiden Seitensäulen 4 und die beiden Hecksäulen 5 abgelegt sind.

In der geöffneten Position von Fig. 8 ist zu erkennen, dass der Windschutzscheibenrahmen 7 in einer solchen Position angeordnet ist bzw. dass die A-Säulen 6 eine derartige Länge aufweisen, dass der Windschutzscheibenrahmen 7 in der geöffneten Position des Dachs 3 zusammen mit dem hinteren Dachteil 9 einen Überrollschutz für sich in dem Kraftfahrzeug befindende Personen bildet.

Die Figuren 1 bis 8 zeigen das Öffnen des Dachs 3. Das Schließen des Dachs 3, d. h. das Überführen desselben von der geöffneten Position gemäß Fig. 8 in die geschlossene Position gemäß Fig. 1, kann in umgekehrter Weise zu dem oben Beschriebenen erfolgen.

Grundsätzlich können sowohl beim Öffnen als auch beim Schließen des Dachs 3 bestimmte Abläufe auch in einer anderen als der dargestellten bzw. beschriebenen Reihenfolge vorgenommen werden, wenn dies aus bestimmten Gründen sinnvoll oder notwendig erscheint.

In Fig. 9 ist eine Heckklappe bzw. Kofferraumklappe 13, die sich wie üblich im hinteren Bereich des Kraftfahrzeugs 1 befindet, in einer geöffneten Position dargestellt. Die Heckklappe 13 ist im vorliegenden Fall an einem unteren Rand derselben drehbar mit der Karosserie 2 verbunden. Dadurch kann die Heckklappe 13 von der in den Figuren 1 bis 8 dargestellten, vertikalen Position in die in Fig. 9 dargestellte, horizontale Position gebracht werden. In nicht dargestellter Weise kann die Karosserie 2 eine Öffnung aufweisen, in welche die Heckklappe 13 aus ihrer horizontalen Position einschwenkbar bzw. einschiebbar ist. Dadurch kann eine Person zum Beladen des Kofferraums des Kraftfahrzeugs 1 vollständig bis an den Rand der Karosserie 2 herantreten. Des Weiteren kann die Heckklappe 13 in nicht dargestellter Weise ein in dieselbe ein- und aus derselben ausfahrbares Heckfenster aufweisen, so dass im geschlossenen Zustand des Dachs 3 gemäß Fig. 1 der Raum zwischen den Hecksäulen 5 geschlossen werden kann.

Zum Antrieb der beiden Seitensäulen 4 und der beiden Hecksäulen 5 können beispielsweise Elektromotoren und/oder Hydraulik- bzw. Pneumatikzylinder eingesetzt werden. Des Weiteren ist es möglich, geeignete Gelenkanordnungen einzusetzen, um das vordere Dachteil 8 mit den beiden Seitensäulen 4 und das hintere Dachteil 9 mit den beiden Hecksäulen 5 zu verbinden. Solche Gelenkanordnungen sind grundsätzlich auch zum Antrieb bzw. zur Führung der Seitensäulen 4 und/oder der Hecksäulen 5 gegenüber der Karosserie 2 einsetzbar. Zur Verbindung der Dachteile 8 und 9 mit den Seiten- bzw. Hecksäulen 4 und 5 können außerdem Verriegelungen vorgesehen sein, die in den Figuren ebenfalls nicht dargestellt sind.

In nicht dargestellter Weise können die beiden Seitensäulen 4 in der Querrichtung der Karosserie 2, also in einer Richtung senkrecht zu der Blattebene, miteinander verbunden sein. Eine solche Verbindung ist insbesondere im oberen Bereich der Seitensäulen 4 denkbar, da hierdurch nicht nur eine größere Steifigkeit, sondern auch eine verbesserte Auflagefläche für das hintere Dachteil 9 erreicht wird.

## Patentansprüche

1. Kraftfahrzeug (1) mit einer Karosserie (2), mit einem zwischen einer geschlossenen Position und einer geöffneten Position verstellbaren Dach (3), welches wenigstens ein vorderes Dachteil (8) und ein hinteres Dachteil (9) aufweist, mit zwei gegenüberliegenden Seitensäulen (4) und mit zwei gegenüberliegenden Hecksäulen (5), wobei das vordere Dachteil (8) drehbar mit den beiden Seitensäulen (4) verbunden ist, dass das hintere Dachteil (9) drehbar mit den beiden Hecksäulen (5) verbunden ist, dass die beiden Seitensäulen (4) und die beiden Hecksäulen (5) beweglich mit der Karosserie (2) verbunden sind, **dadurch gekennzeichnet dass** in der geöffneten Position des Dachs (3) das hintere Dachteil (9) einen Verdeckkastendeckel bildet, unter welchem das vordere Dachteil (8), die beiden Seitensäulen (4) und die beiden Hecksäulen (5) abgelegt sind.

2. Kraftfahrzeug nach Anspruch 1,
**dadurch gekennzeichnet, dass**
die beiden Seitensäulen (4) an jeweiligen Drehpunkten (10) drehbar an der Karosserie (2) angebracht sind.

3. Kraftfahrzeug nach Anspruch 1 oder 2,
**dadurch gekennzeichnet, dass**
die beiden Hecksäulen (5) gegenüber der Karosserie (2) drehbar gelagert und in jeweiligen Führungen (12) gegenüber der Karosserie (2) verschieblich sind.

4. Kraftfahrzeug nach Anspruch 1, 2 oder 3,
**dadurch gekennzeichnet, dass**
die beiden Seitensäulen (4) in Querrichtung (y) der Karosserie (2) miteinander verbunden sind.

5. Kraftfahrzeug nach einem der Ansprüche 1 bis 4,
**dadurch gekennzeichnet, dass**
ein mit jeweiligen A-Säulen (6) verbundener Windschutzscheibenrahmen (7) in einer derartigen Position angeordnet ist, dass er in der geöffneten Position des Dachs (3) zusammen mit dem hinteren Dachteil (9) einen Überrollschutz für sich in dem Kraftfahrzeug (1) befindenden Personen bildet.

6. Kraftfahrzeug nach einem der Ansprüche 1 bis 5,
**dadurch gekennzeichnet, dass**
das hintere Dachteil (9) in der geschlossenen Position des Dachs (3) auf den beiden Seitensäulen (4) aufliegt.

7. Kraftfahrzeug nach einem der Ansprüche 1 bis 6,
**dadurch gekennzeichnet, dass**
die beiden Seitensäulen (4) und die beiden Hecksäulen (5) mittels wenigstens eines Elektromotors und/oder mittels wenigstens eines Hydraulik- bzw. Pneumatikzylinders antreibbar sind.

8. Kraftfahrzeug nach einem der Ansprüche 1 bis 7,
**dadurch gekennzeichnet, dass**
eine Heckklappe (13) an einem unteren Rand derselben drehbar mit der Karosserie (2) verbunden ist.

9. Kraftfahrzeug nach Anspruch 8,
**dadurch gekennzeichnet, dass**
die Heckklappe (13) in eine Öffnung der Karosserie (2) einschwenkbar ist.

10. Kraftfahrzeug nach Anspruch 8 oder 9,
**dadurch gekennzeichnet, dass**
die Heckklappe (13) ein in dieselbe ein- und aus derselben ausfahrbares Heckfenster aufweist.

## Claims

1. Motor vehicle (1) with a body (2), with a roof (3) adjustable between a closed position and an opened position, which has at least one front roof part (8) and one rear roof part (9) with two oppositely-lying side columns (4) and with two oppositely-lying rear columns (5), wherein the front roof part (8) is connected rotatably with the two side columns (4), that the rear roof part (9) is connected rotatably with the two rear columns (5), that the two side columns (4) and the two rear columns (5) are movably connected with the body (2), **characterised in that** in the opened position of the roof (3) the rear roof part (9) forms a soft top compartment lid under which the front roof part (8), the two side columns (4) and the two rear columns (5) are stored.

2. Motor vehicle according to claim 1,
**characterised in that**
the two side columns (4) are mounted to the body (2) rotatably at respective rotation points (10).

3. Motor vehicle according to claim 1 or 2,
**characterised in that**
the two rear columns (5) are mounted rotatably with respect to the body (2) and are slidable in respective guides (12) with respect to the body (2).

4. Motor vehicle according to claim 1, 2 or 3,
**characterised in that**
the two side columns (4) are connected with one another in a transverse direction (y) of the body (2).

5. Motor vehicle according to one of claims 1 to 4,
**characterised in that**
a windscreen frame (7) connected with respective A-columns (6) is disposed in a position such that it in the opened position of the roof (3) forms, together with the rear roof part (9), a rollover protection for persons being in the motor vehicle (1).

6. Motor vehicle according to one of claims 1 to 5,
**characterised in that**
the rear roof part (9) in the closed position of the roof (3) lies on the two side columns (4).

7. Motor vehicle according to one of claims 1 to 6,
**characterised in that**
the two side columns (4) and the two rear columns (5) are driveable by means of at least one electric motor and/or by means of at least one hydraulic cylinder or pneumatic cylinder.

8. Motor vehicle according to one of claims 1 to 7,
**characterised in that**
a boot lid (13) is connected rotatably with the body (2) at a lower edge of the same.

9. Motor vehicle according to claim 8,
**characterised in that**
the boot lid (13) can be swivelled into an opening of the body (2).

10. Motor vehicle according to claim 8 or 9,
**characterised in that**
the boot lid (13) has a boot window which can be extended into and out of the same.

## Revendications

1. Véhicule automobile (1) avec une carrosserie (2), avec un toit (3) qui est réglable entre une position fermée et une position ouverte et qui présente au moins une partie de toit avant (8) et une partie de toit arrière (9), avec deux montants latéraux (4) opposés et avec deux montants arrière (5) opposés,
dans lequel la partie de toit avant (8) est reliée aux deux montants latéraux (4) de manière à pouvoir tourner,
dans lequel la partie de toit arrière (9) est reliée aux deux montants arrière (5) de manière à pouvoir tourner et
dans lequel les deux montants latéraux (4) et les deux montants arrière (5) sont reliés à la carrosserie (2) de manière mobile,
**caractérisé en ce que**, dans la position ouverte du toit (3), la partie de toit arrière (9) forme un couvercle de coffre de capote sous lequel la partie de toit avant (8), les deux montants latéraux (4) et les deux montants arrière (5) sont rangés.

2. Véhicule automobile selon la revendication 1, **caractérisé en ce que** les deux montants latéraux (4) sont montés au niveau de la carrosserie (2) de manière à pouvoir tourner au niveau de points de rotation (10) respectifs.

3. Véhicule automobile selon la revendication 1 ou 2, **caractérisé en ce que** les deux montants arrière (5) sont logés de manière à pouvoir tourner par rapport à la carrosserie (2) et sont déplaçables dans des guides (12) respectifs par rapport à la carrosserie (2).

4. Véhicule automobile selon la revendication 1, 2 ou 3, **caractérisé en ce que** les deux montants latéraux (4) sont reliés l'un à l'autre dans la direction transversale (y) de la carrosserie (2).

5. Véhicule automobile selon l'une quelconque des revendications 1 à 4, **caractérisé en ce qu'**un cadre de pare-brise (7) assemblé à des montants avant (6) respectifs est agencé dans une position telle qu'il forme dans la position ouverte du toit (3), conjointement à la partie de toit arrière (9), une protection au retournement pour des personnes se trouvant dans le véhicule automobile (1).

6. Véhicule automobile selon l'une quelconque des revendications 1 à 5, **caractérisé en ce que** la partie de toit arrière (9) repose, dans la position fermée du toit (3), sur les deux montants latéraux (4).

7. Véhicule automobile selon l'une quelconque des revendications 1 à 6, **caractérisé en ce que** les deux montants latéraux (4) et les deux montants arrière (5) peuvent être entraînés au moyen d'au moins un moteur électrique et/ou au moyen d'au moins un vérin hydraulique ou pneumatique.

8. Véhicule automobile selon l'une quelconque des revendications 1 à 7, **caractérisé en ce qu'**un hayon (13) est relié à la carrosserie (2) au niveau de son bord inférieur de manière à pouvoir tourner.

9. Véhicule automobile selon la revendication 8, **caractérisé en ce que** le hayon (13) peut pivoter dans une ouverture de la carrosserie (2).

10. Véhicule automobile selon la revendication 8 ou 9, **caractérisé en ce que** le hayon (13) présente une lunette arrière pouvant être rentrée dans celui-ci ou sortie de celui-ci.
